# EUROPEAN PATENT SPECIFICATION

(11) **EP 2 068 070 B1**
(45) Date of publication and mention of the grant of the patent: **21.07.2010**
(21) Application number: 08445033.7
(22) Date of filing: 14.10.2008
(51) Int. Cl.: F21S 11/00, G02B 6/00, F21V 8/00

(54) **Versatile light system**
Flüchtiges Lichtsystem
Système d'éclairage polyvalent

(30) Priority: 06.12.2007 SE 0702749; 13.02.2008 GB 0802632; 04.06.2008 GB 0810263; 31.07.2008 GB 0813946
(43) Date of publication of application: 10.06.2009
(73) Proprietor: Levon, Leif, 138 30 Älta (SE)
(72) Inventor: Levon, Leif, 138 30 Älta (SE)

(56) References cited:
- WO-A-2004/044481
- AU-B2- 609 107
- US-A- 3 934 148
- US-A- 5 426 877
- US-A- 5 897 201
- US-A1- 2004 228 144
- US-B1- 6 350 041

## Description

### CROSS-REFERENCE TO RELATED APPLICATIONS

This application for a utility patent claims the benefit of Swedish patent application No. 0702749-3 filed December 12, 2007, including UK patent application numbers GB0802632 filed February 14,2008 and GB0813946.1 filed July 31 2008.

### FIELD OF INVENTION

This invention relates generally to energy saving light systems able to effectively use fluorescent or luminescent substances in conjunction with reflectors, prisms and/or lenses to respond to surrounding light or other energy sources in order to fluoresce or luminesce and emit light of various wavelengths, as well as operate in combination with other illumination systems , enabling constant production of light or glow, irrespective of external prevailing dark or light environmental conditions.

### BACKGROUND OF THE INVENTION

Methods to enhance attractiveness of ornaments and ensure increased safety for pedestrians and motorists using light and motion, in an environment friendly energy saving way, receiving power from remote energy sources.

Ornaments become more appealing by making them motile and/or glow. Likewise traffic cones or warning posts become more visible when combining a visible light source, and help to alert or draw attention to certain dangers such as road barriers.

A common method used is to add a light source powered by small electro-chemical cells to certain sections or parts of an item.

However, this method is only temporary in nature, since the active life of these batteries are short lived and soon require replacement.

One method to overcome this problem is to use rechargeble batteries or solar panels. These methods only solve part of the problem, since batteries are often cumbersome to replace, add weight and space of the article under consideration, and solar panels occupy vast surface areas relative to that provided by its host appliance.

Utitizing ambient light, sunlight and induction techniques in suitable fashion will solve all these problems. The versatile light system aims to combine different technologies in order to both save electric energy, as well as to promote safety and act as a decorative device in it's own right or as part of other objects.

Massive objects can receive and transmit light from one end to the other, as well as via their sides, and then further convey their rays along their length until finally terminating at their terminal ends. Instead of received light crossing/traversing a cylindrical lens or rod, it may, due to properties of the material, especially uranium glass or plastic, spread the rays lengthwise along the structure, by internal reflection, tending to transcend towards its external ends. Other body shapes and properties may allow the entire structure to glow. For example multi-faceted symmetrical or asymmetrical objects may exhibit enhanced light receiving and transmitting properties.

These facets may be in the shape of multiple plane surfaces or small dome shaped surfaces acting as small lenses. Other examples may simply appear as honey comb shaped , resembling a bunch of grapes, or more complex forms such as compound eyes similar to that seen in certain insect species. Mufti-faceted configurations provide an increased surface area for receiving and transmitting light/radiant energy, and promote further photon excitation and luminescent ability.

This property of solid materials, to absorb and distribute light, may be used to collect ambient and other light rays to make ornaments appear to illuminate more than normal, and appear beautiful to an onlooker.

This phenomenon is not restricted to solids, but may occur in other forms such as liquids, gels and gases.

Combining light guide technology and configuring reflectors to collect and concentrate light onto and into solid objects, as well as utilizing a plurality of lenses and or prisms or crystals,at or near areas where light is distributed or received, will create powerful enhanced illumination improvements,as opposed to whether they were not employed. Working in tandem this symbiotic relationship can even reduce the demand for batteries in certain collectables, gifts, toys or a variety of other items. In effect the materials' properties of being able to act as light receivers and transmitters simulaneously provides a form of preseving energy.

For example ornamental crystals or decorative glass objects may appear to be internally lit, when in fact they are only utlizing ambient or indirect light, in order for them to glow brightly.

Luminescent objects may be symmetrical or asymmetrical ,of variable size and shape, positioned in such a way as to maximize the amount of light received along their body structure, in order to further conduct/conveyltransmit to as well as from their distal ends or entire body structure. Materials which promote photon activity, such as vaseline/uranium/plutonium/fluorescent/biolgical hybrids, inorganic or organic substances may be added.

Internally or partly internally mounted light receiving/transmitting/conducting objects may be made of any material or substance able to absorb photons by means of electromagnetic radiation such as light or other methods promoting excitation of photons to a higher energy state as well as able to emitting photons.

There are an-abundance of materials which when influenced by an energy source excite electrons and produce light. Many are called fluorescent,luminescence, photoluminescent, bioluminescence, phosphorescent and some are simply called day-glo or neon colours, and contain pigments and minerals. Coumarin for example Coumarin6 is an example of an effective fluorescent daylight pigment dye. Electro-luminescents or fluorescents can also be excited/activated using induction techniques, such as induced currents,microwaves,high energy transference, or photovoltaic means. Indeed any system which emits light when bombarded by radiation may be employed or chemicals which absorb ultraviolet light and release visible light as energy.

### Prior Art

Examples of noted prior art may be exemplified by:
U.S. Pat. No.2007091635,showing a lens collecting ambient light from outside an electronic device to illuminate an internal display surface.
GB2240616 relates to a light receiving reflector lacking a posterior aperture with a spaced relation to a centrally placed light adsorbing body.
GB5934782 exemplifies a light guide apparatus composed of a translucent plate in conjunction with light pipes and converging facets directed toward a catchment area.
U.S. Pat. No. 5,092,809 illustrating a pinwheel toy having iridescent blade tips containing fluorescent dye.
U.S. Pat. No. 4,655,721 depicting luminescent material in conjuction with a toy doll.
U.S. Patent Application Publication 200210065019 A1, demonstrating a novelty toy wand and claims that a second end is internally mirrored.
G.B1473690 describing a light distributing unit consisting of flat sheets or rods whose end surfaces emit light in response to general illumination of the main surfaces by daylight. WO 2004/044481 and US 6350041 are describing a photo-luminescent body received in a mirror.

The invention includes U-shaped rods projecting through apertures, but no apertures hosted by reflectors, and describes reflectors only as receivers of light emanating from each end of tips of rods or ends of plastic sheets, and specifies further in claim #10 that there is a spaced relation to the terminal surface of the fluorescent plastics member, and confirmed by their accompanying drawings.

The previous prior art does not either include other important enhancing luminescent techniques, such as rear light collectors and concentrators in the form of posteriorly situated reflectors or even lenses or prisms gathering light from behind the luminous material.

Hence, all of the above mentioned inventions emit a very weak light compared to rods, sheets or objects of any other shape and configuration made from light receiving/transmitting/conducting/luminescent materials that are specifically internally or partly internally mounted into reflectors that collect and reflect light rays anteriorly as well as posteriorly.

Reflectors promote photon pump activity by effectivily acting as light collectors and provide more concentrated light to the luminescent material, while simultaneously allowing the reflective surfaces to act as both receivers and transmitters of light, delivering a powerful continous two way flow of radiant energy or constant chain reaction.

Thus, the efficiency or number of Lux or Lumen/Luminous flux/Candela increases when the material receives light from the front of the reflector as well as the exposed portion protruding through the reflectors rear aperture.

Luminosity may also be enhanced by compressing luminescent material or housing luminescent dyes and particles in a pressurized translucent compartment. While certain fluorescent particles will react favourably in a vacuum or among noble gases. Light of certain wavelengths will also alter the sensation of brightness, and is influenced by the reflecting and refracting material and medium surrounding the illuminated object. Other light enhancing techniques may be in the form of multiple luminescent bodies such as several spherical objects, bundles of rods, layers of sheets,several pyramidal/conical objects or a variety of symmetrical or asymmetrical shapes.

Flourescent dyes may be further divided into primary colours such as green, red and blue/violet. Combining sets of primary colours may provide a whither stronger light. The greatest efficiency is achieve if sun light or ultra violet light is allowed to collect and internally reflect rays from an additional posteriorly situated light guiding reflector or surrounding reflecting collar accompanied by lenses and/or prisms surrounding the dorsal part of the intemally mounted fluorescing or luminescing material. In fact the light intensity or efficiency may even surpass a variety of conventional battery operated diode lamps or incandescent light bulbs, and may therefore substitute these for this more environment friendly system, as well as contribute to a reduction in the ever mounting waste of resources such as manufacturing and disposing of electro-chemical cells and might be regarded as a new energy source or alternative form of energy to power certain kinds of lamps, resulting in reduced green-house gases.

The versatile light system also has the objective of being durable, long lasting, lighter than conventional systems and have a relatively low or neglible heat dissipation rate. Since a versatile light system is able to work without batteries or large solar panels the unit may appear relatively light weight and non fragile. It may also act as a very mobile untethered versatile light system.

Traditional solar garden lamps are only lit during darkness since they require recharing during sun lit hours. Since the versatile light system is able to shine during day light and is not dependant on batteries it may be combined with a traditional solar powered lamp and so by secure a 24 hour illumination device. The invention is defined in the claims.

The versatile light system operates according to the following main principles:

An object may be placed near or in a reflector. The reflector will collect and reflect light onto the object, and the object in turn will receive and transmit light onto the reflectors surface.

The end result is that both the reflector and the object emit light to an observer.

A reflector may have an aperture through which a tail section or hind portion of a body protrudes in order to receive additional external light. This terminal portion may both receive light from the rear region as well as that stemming from its main body section lodged in the anterior compartment. Since the posterior section may also appear to glow it may be used in a decorative or functional manner. This can be achieved by applying lenses or prisms near or on it's surface.

Additionally, a reflector or reflectors may envelope it's area in order to both project light onto the bodies end piece as well as reflect light issuing from it.

When two reflectors are set up in this manner, their rear convex surfaces face one another and their apertures merge in order for the light receiving/transmitting body to appear on either side of their concave surfaces.

A small gap between their convex surfaces will ensure light to reflect beween these surfaces and reach an exposed portion of the light receiving/transmitting body.

This method is especially useful for earrings or wall ornaments, since an opposing side will be physically or structurally blocked and hindered from receiving radiant energy.

A similar arrangement can be employed using pyramidal, conical or oblong reflectors Versatile light systems may be provided with their own internal light source powered by induction, by transfering energy wirelessly from a distantly placed primary coil to a secondary coil housed in or near one of the reflectors.

Most reflectors project light outwardly convergently,divergently or in a collimated fashion.

However, some reflectors may work in reverse order, acting as a light guide and reflecting inwardly. That is light rays are internally reflected toward the reflectors rear converging base aperture instead of forward. As the circumference or radius of the reflector diminishes the light tends to concentrate in the confined space.

This is especially beneficial when the main objective is to concentrate light onto an internally mounted or partly placed light receiving/transmitting body.

Creating motion of decorative ornaments or sign posts is another important visual stimulant and function. The ability to change direction of a light source is necessary for a number of reasons. Movement will allow tracking of a light source in order to maintain maximum supply of radiant energy, as well as face a particular direction in order to enter a particular field of view.

Movement can occur mechanically, electromagnetically,magnetically, or by external forces such as air / water pressure fluctuations, temperature changes or wind currents. One or more magnets suitably mounted on or under the ornament, mutually engaged by distant magnetic forces for example a levitator or other magnetic actuator, can be made to move or even levitate reducing undesirable frictional forces and appear novel. Other inductive forces may of course also be employed.

Energy saving methods would involve winding up a spring driving a metronome, egg timer or dock. For side to side movements a magnet may be affixed to the metronome's pendulum and the apparatus positioned below or to the side of an ornament accompanied by a magnet. For circular movements an egg timer carrying a magnet may be used. Even a solar powered rotating flower pot stand modified for carrying magnets will cause indirect movement.

The versatile light system may be made to blink by covering sections with sheets containing crystals or polarizing particles which respond to slight energy fields, becoming intermittently translucent, and regulated by currents from secondary coils receiving energy from distant primary coils or small photo voltaic solar cells.

The light receiving/transmitting/conducting/fluorescent material may be in solid, liquid or gas form, and may be charged and excited by distantly placed energy sources such as ultra violet light,laser,infrared, microwaves and all other types of electromagnetic radiation as well as influenced by external electromotive forces.

Although shape or form of reflectors does influence reflective as well as collective abilities, any design may be used in combination with suitably placed flourescent or luminescent material, and is generally not restricted to any particular reflective angle. Special effects may of course be achieved when altering reflective angles. In some cases when directing concentrated light toward a tapered end of a light collecting reflector, a reflective angle of between 40 and 0 degrees may be desirable. Concave and parabolic shapes on the other hand tend to concentrate light more centrally in the front region, and may be influenced by Fresnell, hologram, laser grooved or multifaceted reflective surfaces. Rays may also be redirected from reaching a parabolic mirror's focal point by including a smaller supplementary reflector having their concave surfaces face one another, enabling collimated rays to reach the light receiving/emitting material.

The invention will now be described by referring to the accompanying drawings:
Fig.1 Shows a cross section of two reflectors back to back, each capable of receiving and transmitting light to and from light conducting and transmitting material adjoining the reflectors at their base apertures.
Fig 2. Shows a schematic perspective of Fig. 2, including a diode for additional light, powered by a secondary coil, receiving energy via a primary coil placed some distance away, and a magnet influenced by surrounding magnets, in order to create motion or levitational effects.
Fig. 3 Illustrates cross section of a convex reflector placed inside a concave reflector, with their reflective gap partly or completely filled with light conducting and emitting material, where part of this material protrudes from the base aperture of the smaller reflector.
Fig. 4 Depicts Fig. 3 as seen from above.
Fig. 5 Shows a perspective view of Figures 3 and 4.
Fig. 6 Portrays a modified version of Fig. 1. with one large and one small reflector joined by a small bridge, between their rear apertures, of light conducting and light emitting material, partly filling the void of the large reflector as well as occupying a central area of the small reflector.
Fig. 7 Shows a top view of Fig. 6.
Fig. 8 Shows curved optical rods sunk in-between circular reflective depressions.
The tips of rods project up and out of the mirror like opening, and enter reflectors housed by spherical lenses. A secondary coil and a magnet are visible in the middle of the drawing.
Fig. 9 Shows a side view of one of the optical sets mounted in circular formation in Fig. 8.
Fig. 10 Shows Fig. 9 as it would appear from above.
Fig. 11 Shows a simplified version of the invention, consisting of only one reflector, but still able to collect and recieve light from the front and the rear.
Fig. 12 Shows a very basic model of the invention, where one reflector houses optical strands or fibres.
Fig. 13 Shows a front view of the invention placed on a small guide track to provide variable motion when activated by a distant magnet, as well as illuminate in the dark aided by one or more diodes connected to a secondary coil powered by a concealed primary coil.
Fig. 14 Shows a perspective view of figure 13.
Fig. 15 Shows the combined use of a reflector receiving light from specially adapted conical or pyramidal light guide reflectors.
Fig. 16 is a perspective view of a Fig. 15.
Fig. 17. shows an example of a pyramidal reflector tailor made for the versatile light system.
Fig. 18 Shows how conical and pyramidal reflectors may work independently from standard reflectors i.e. those that reflect outwardly.
Fig. 19 shows a cross section of pyramidal or conical reflectors as used in Fig. 18.
Fig. 20 shows a curved light conducting rod emitting light to an oblong reflector or vice versa.
Fig. 21 illustrates a symmetrically shaped versatile light system reflector arrangement housing a multifaceted fluorescent optic body.
Fig. 22 depicts a thick prismatic lens in the form of a sea shell as it would appear on either side of reflector ornament described in Fig. 21.
Fig. 23. Shows a side view of a versatile light system intended for receiving light while mounted on a wall.
Fig. 24. Shows Fig. 23 as seen from the front
Fig. 25. Shows a versatile light system utilizing looped rods in order to provide light to an internally mounted refracting body.
Fig. 26 Illustrates the use of fins or sheets of luminescent material in order to create light displays within a reflector.
Fig. 27 Depicts the use of a wine glass stem in order to effectively receive light and introducing it into the internally mounted versatile light system and so by create further artistic light.
Fig. 28 Demonstrates the use of a drinking glass having a prismatic base.
Fig. 29 Graphically illustrates how a light base is able to effectively deliver concentrated light through an internally reflecting tapering device to the versatile light system.

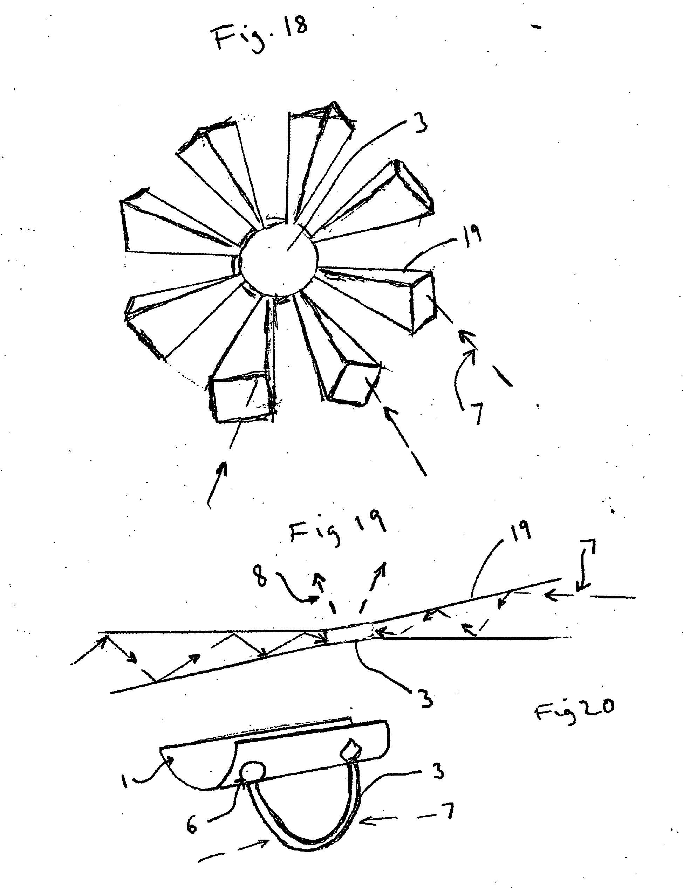

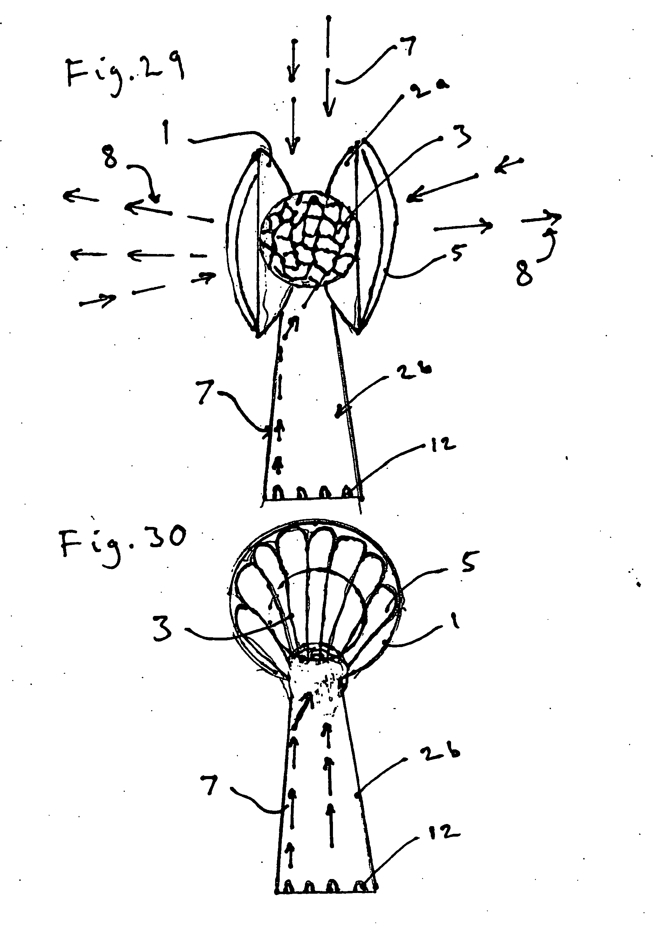

Fig. 20 shows a front view of Fig 29.

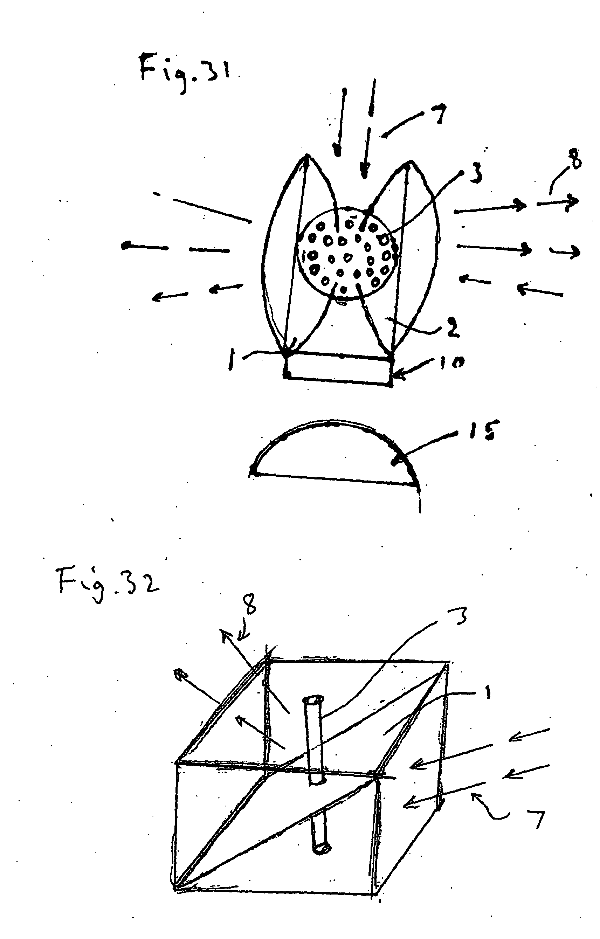

Fig. 31 Shows a side view of a versatile light system levitating over a levitator by means of electro-magnetism and powerful neodymium magnets.
Fig. 32 Shows a perspective view of a modified magic coin bank box having plane partitioning reflective mirrors on other side, with one or more apertures providing support for luminescent material.

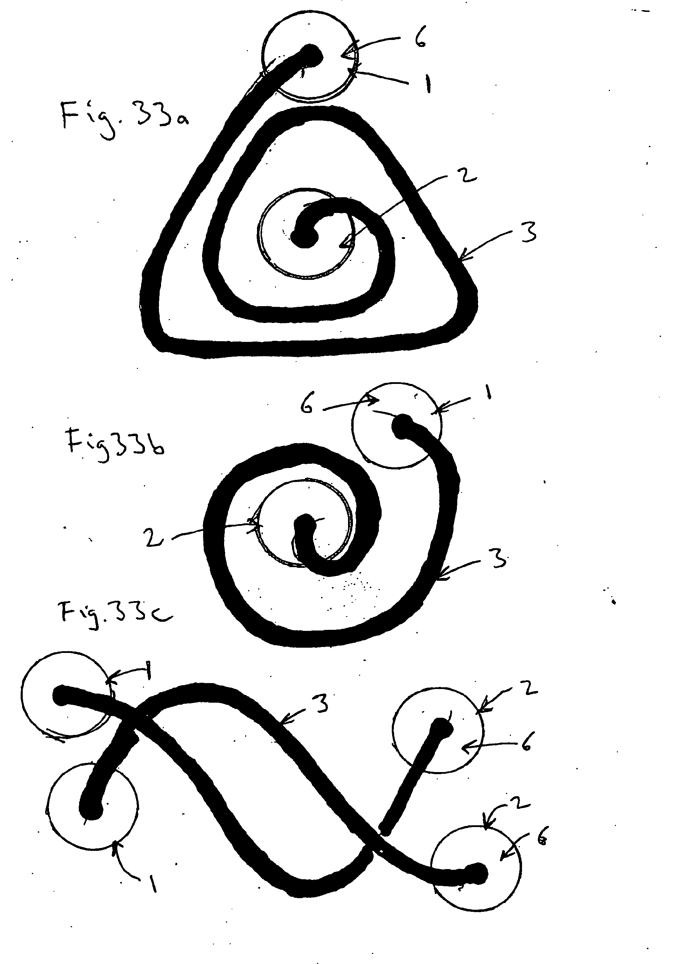

Fig. 33a,b and c depict ornamental design shapes intended for decorative purposes and jewellery.

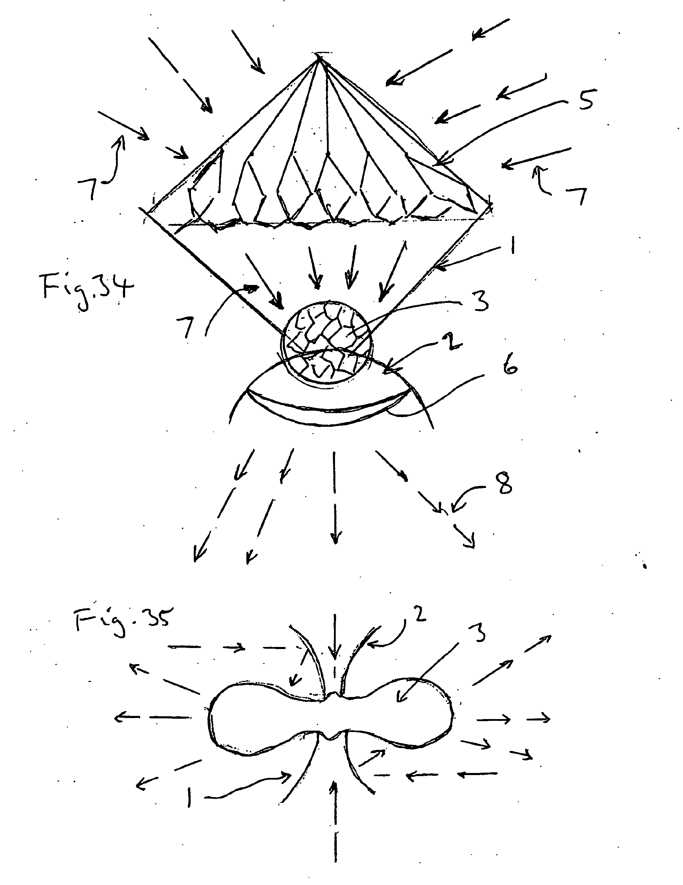

Fig. 34 Depicts a solar concentrator designed to provide a strong glowing light.
Fig. 35 Demonstrates two joined bulb shaped objects with luminescent properties able to receive light and glow simultaneously or separately at both ends.

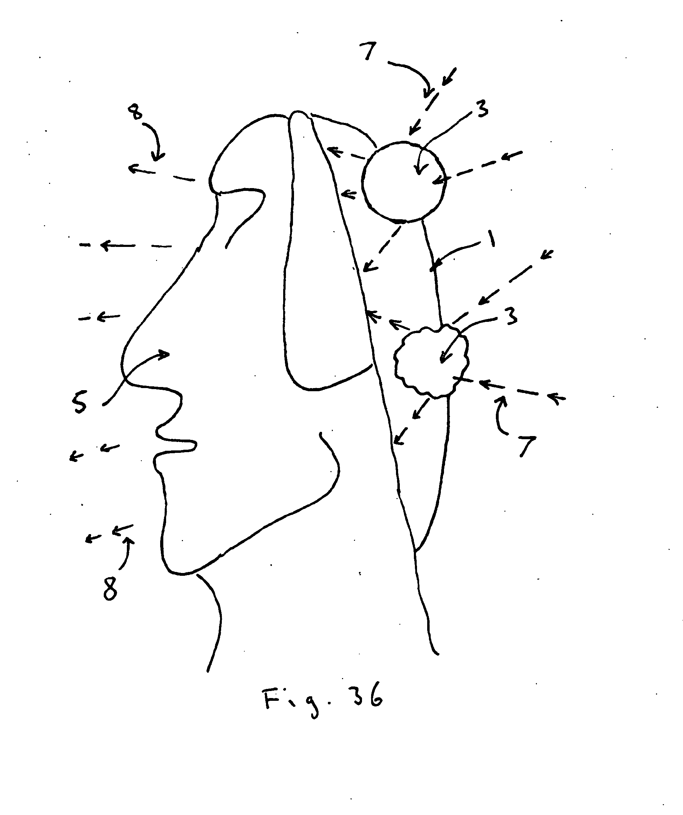

Fig. 36 Shows a glass or crystal figure acting as a combined lens and prism illuminated from behind by a versatile reflector light system.

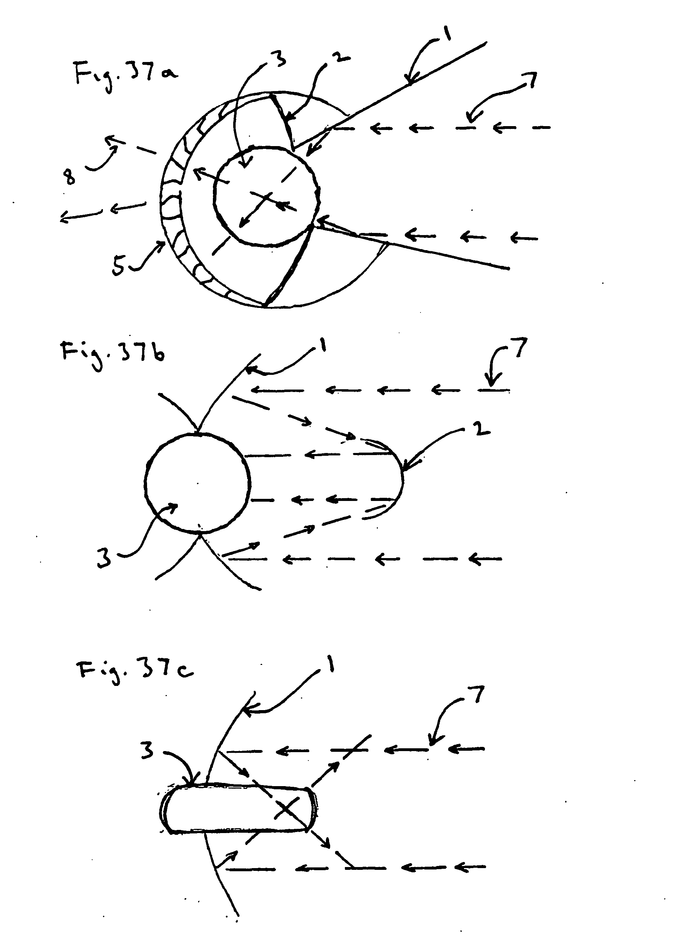

Fig. 37a shows a side view of a reflector working in reverse, reflecting light toward a tapered end and concentrating convergent rays in the vicinity of the reflectors smaller aperture.
Fig. 37b shows a small reflector housed within a larger parabolic reflector, able to re-direct collimated or other rays toward the parabolic mirror's smaller aperture surrounding a luminescent or flourescent body.
Fig. 37c shows a side view of a parabolic reflector concentrating rays at a focal point corresponding to an area covered by a portion of a light receiving and conducting body.

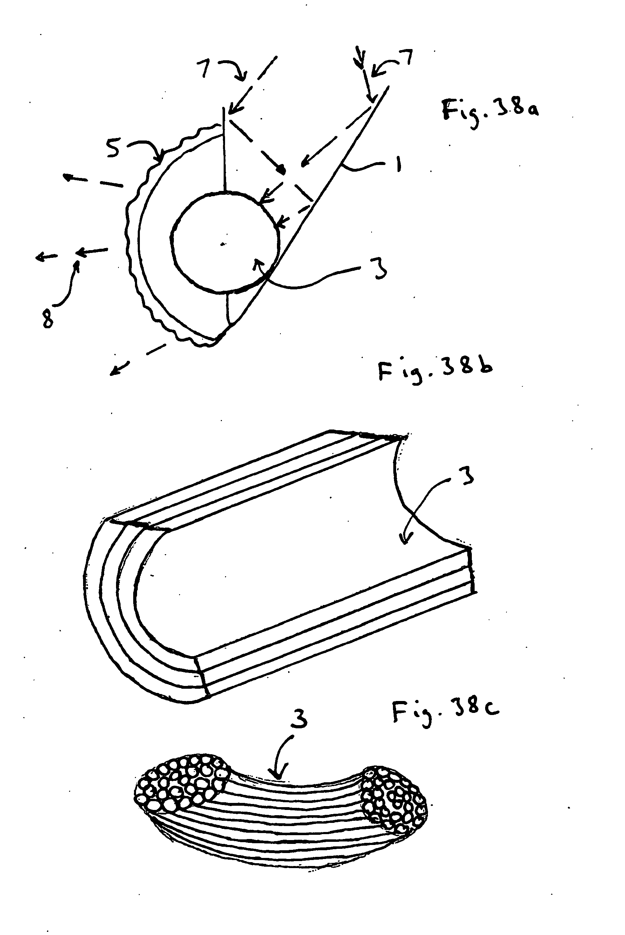

Fig. 38a shows a side view of a light conducting and transmitting body partly internally mounted into a side of a reflector's walls.
Fig. 38b shows a perspective view of layers of sheets of luminescent material, intended to be mounted in reflector apertures along the reflective walls or converging end.
Fig. 38c shows a perspective view of a bundle of luminescent rods intended to protrude from light collecting reflectors.

### Detailed description.

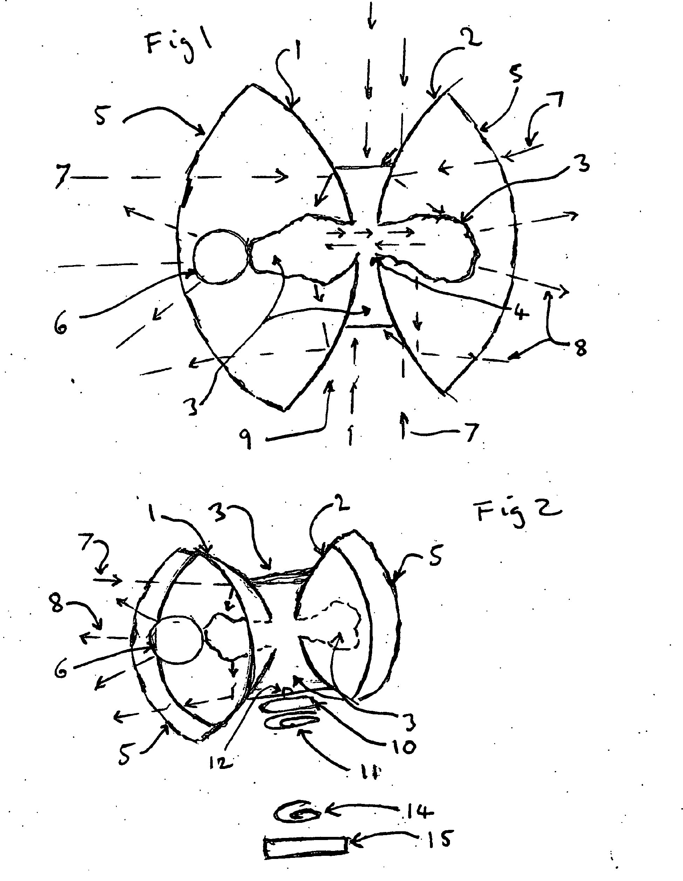

Fig.1 Shows a cross section of a portable multi purpose versatile light system powered by ambient light during the day and induction technology by night. Reflector 1 is connected to reflector 2, by means of light transmitting and light recieving material 3 , which runs through both hind apertures 4 of each reflector. The two reflective convex surfaces facing one another form a tapering circular trough 9, receiving and guiding incoming light rays 7, towards light conducting material 3, partly lodged in between trough 9, and transcending through apertures 4 to reach central areas of reflectors 1 and 2. The light conducting material 3 emits light rays 8, which reflect onto surrounding reflector surfaces as well as through lens 6 and prismatic face 5. Reflectors have been provided with prismatic or lens cap covers 5, in order to create interesting optical effects, and various lenses 6 may appear to enlarge the light source.
Fig. 2 Shows a perspective view of Fig.1, including a diode lamp 12, embedded in light conducting material 3, intended for use when the light is too dim. Also shown are magnets and coils to operate the lights and provide some motile force. Primary coil 14, placed near secondary coil 11 ensures transfer of energy to illuminate light diode 12, which in turn makes the device glow in the dark. Magnet 10 reacts to positional alterations of control magnet 15, which may be placed on a suitable rotary or oscillating system. Pulsed induction motors may also enable or influence movement of magnet 10, and thereby create a variety of movements of the entire versatile light system.

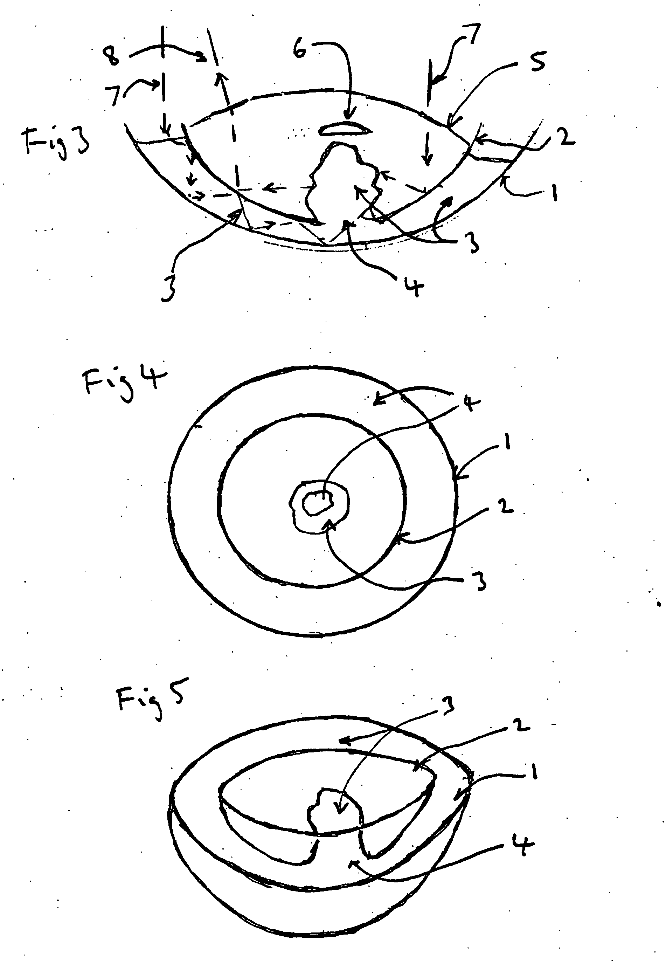

Fig. 3 Shows a cross section of an ornament comprised of a reflector 2 having concave and convex reflector surfaces, where the convex surface is lowered into reflector 1's concave reflecting surface. Light conducting material 3 forms a partition between the convex and concave mirror like surfaces and part of this material extends through aperture 4 in order to provide light to reflector 2. The circumferential gap,created between the two reflectors acts as a light guide system, allowing delivery of light rays 7 to all parts of the light conducting material 3. Reflector 1 also receives incoming light rays 7, which in turn reflect onto light conducting material 3. Light rays are internally reflected by the light emitting material 3 and the reflector walls, and some light is reflected/emitted outward through lens 6 and prismatic cover-lens 5, as rays 8.
Fig. 4 envisions Fig. 3 as it would appear from above. The rim of reflector 1 acts as a compartment for some of the light conducting/receiving material 4, as well as a light collector and guide/conduit for approaching rays.
Fig. 5 shows a perspective view of Fig. 3. Light conducting and receiving material 4, envelopes part of reflector 2's convex base, as well as protudes up through the reflectors aperture. Reflector 1;s convex reflective surface, in turn, surrounds both the light conducting material 4 as well as reflector 2.

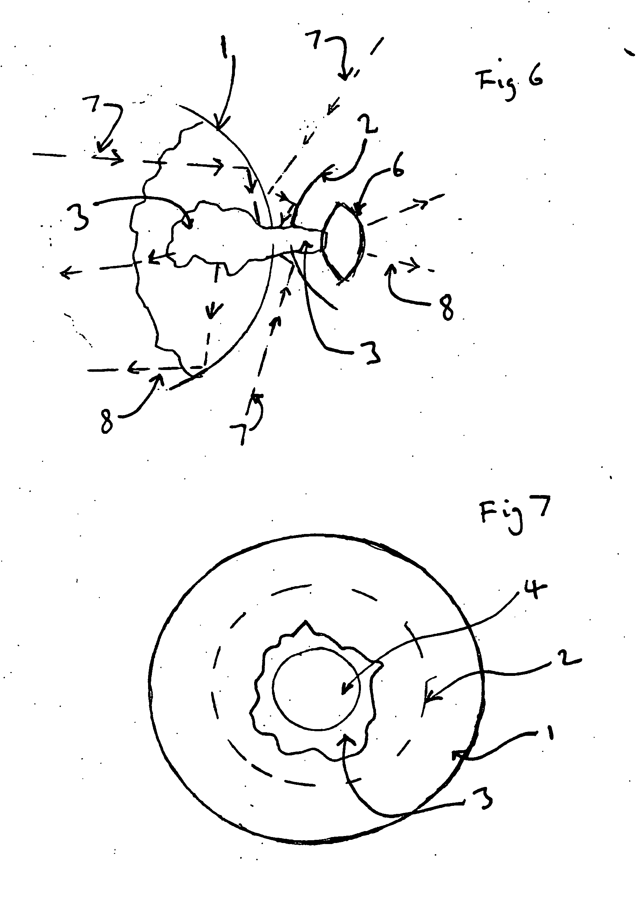

Fig. 6 Illustrates a variant of Fig. 1. Two reflectors, each having concave and convex reflective surfaces, act in concert in order to receive and emit light. Reflector 1 is relatively large, and houses the main body portion of the light conducting material 3.
Rays 7 enter the reflector and reflect onto fluorescent light conducting material 3, which in turn glows and feeds photons to it's tail region,partly exposed in the adjacent space between the reflectors, and to a certain extent penetrating reflector 2. Additional light rays 7 are seen to enter between the reflector crests and into the circular valley area or circular trough, to reach connecting material 3. Fig. 7 is a front view of the large reflector 1, showing light emitting material 3 in the middle, base aperture 4, and an outline of the smaller reflector 2 in the background.

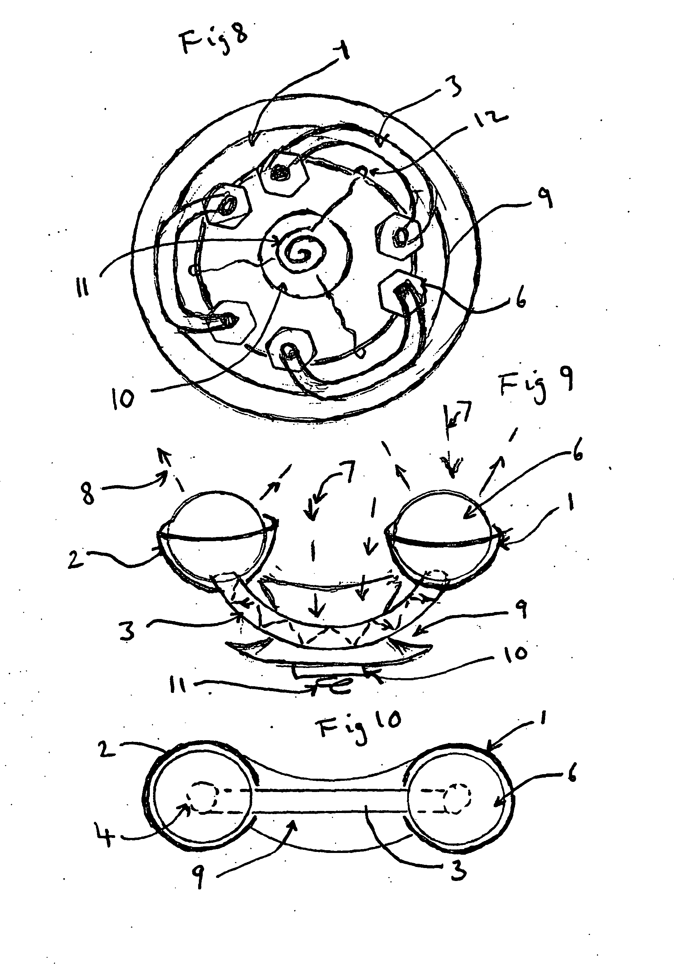

Fig. 8 Depicts circular troughs 9, having V-shaped/concave reflective surfaces. Light conducting material 3, in the form of rods, have been lowered into the groove like depressions, in order for the rods to receive concentrated light from the light guide-like reflective walls.
   The exposed ends of the light rods 3, are curved and ascend from the bottom of the trough, or may exit through apertures anywhere along the reflective sides and are provided with their own set of reflectors 1 and 2, including spherical lenses or prisms 6. Shapes should not be restricted to rods and may include a variety of other symmetrical or asymmetrical forms.
   During the day this versatile light ornament will emit sufficient decorative light, but at dusk it will require support from auxiliary lights.
   Therefore small diode lamps 12 have been supplied to an appropriate area, such as at the bottom of each trough. The diodes in turn are provided with current via a secondary induction coil 11. The ornamental device is aslo equipped with a magnet 10, in the event one wishes it to interact eledro-magnetically or solely magnetically in order to achieve additional display criteria. For example it may spin,roll, rock or rotate.
Fig. 9 Illustrates a single set able to operate independently from the other sets set in circular formation shown in Fig. 8. Light rays 7 strike V-shaped or concave reflective surfaces surrounding trough 9. Rays are concentrated in the basement area of the depression, and are absorbed by the light conducting material rod 3. The rays then escape from the rods' terminal ends and are reflected through spherical lenses 6 guided by accompanying reflectors 1 and 2. Light can of course both be received and transmitted to and from either end of the rod,and used in other interesting applications.
Fig. 10 Shows a top view of Fig.9, and illustrates clearly the curvature of trough 9, as well as the positioning of reflectors 1 and 2, in relation to the placement of spherical lenses or prisms 6, and apertures 4, from which the terminal ends of the light emitting rods 3 release photons or visible light.

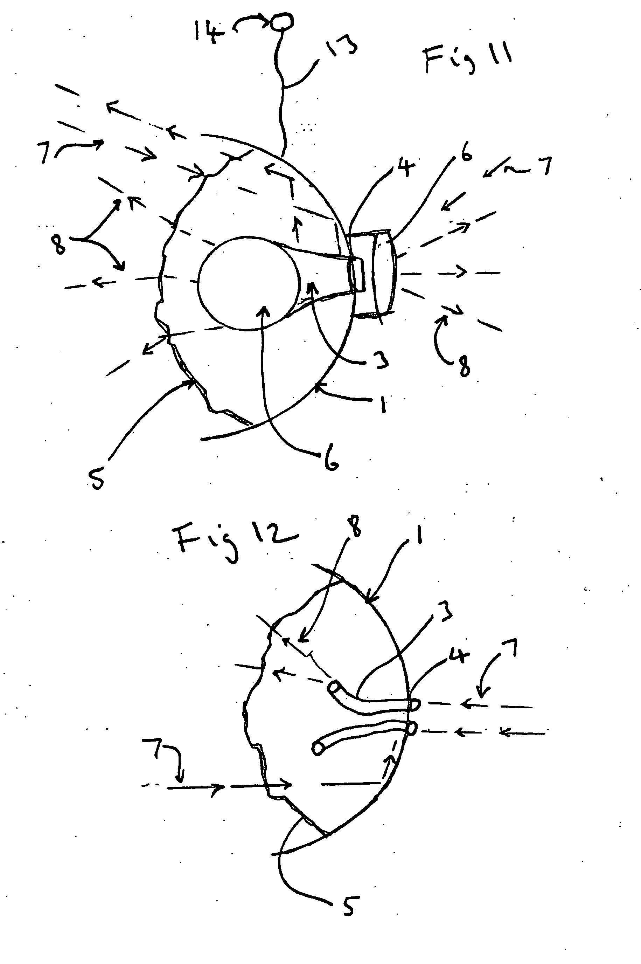

Fig. 11. Shows a cross sectional side view of how only one reflector 1, may be employed as a decorative object, and mimic a active light bulb, using reflecting technology.
   This type of ornament may be used as decoration material for Christmas trees. A reflector houses a bulbous structure made from light emitting/receiving material 3, where the globular or bulging portion acts as a lens 6, and the stems lower end sprouts through the reflectors rear aperture, in order to project light through a lens mounted close to the light emitting end of 3. The drawing shows incoming rays 7 striking reflector 1, in order to reach light emitting material 3, and demonstrates how rays 8 pass through prismatic face 5, and rear lens 6. An additional component has been added, in the form of a tether 13 and hook 14, in order to secure the ornament to a branch of a Christmas tree or to hang from the ceiling or window frame.
Fig. 12 Shows a cross section of reflector 1, with light emitting/receiving/transmitting material in the form of rods, strands or fibres 3, jutting out of a central rear portion of the reflector. Light rays 7 are receive from either side of the reflector, and these are in turn reflected through prismatic lens 5.

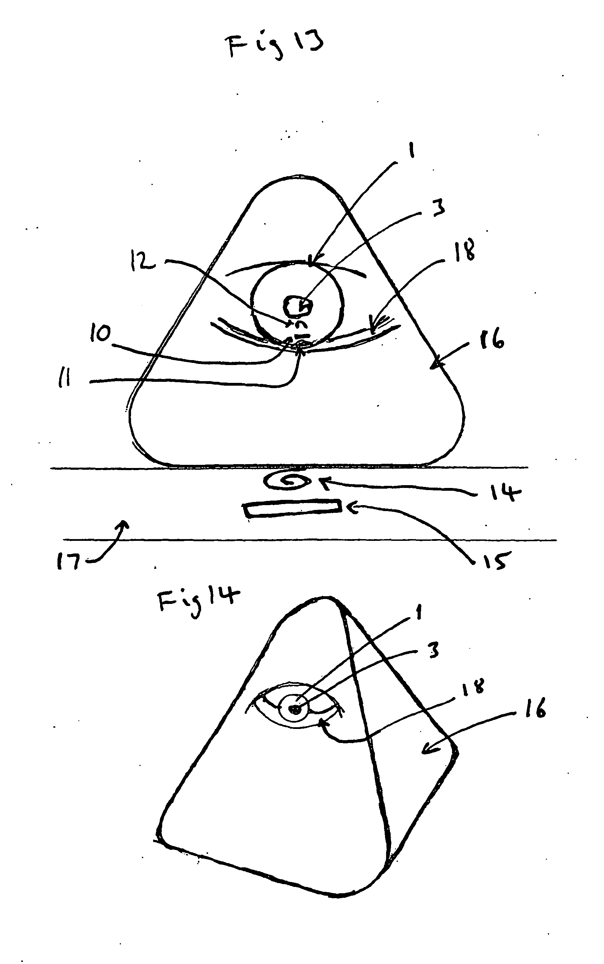

Fig. 13 Shows a front view of the versatile light system used in conjunction with another ornamental piece or traffic cone/pyramid, in order to enhance the appeal and utility of both objects, by adding light and motion.
   A transparent/transluescent glass or plastic ornament, exemplified here as a pyramid, may act as a container 16, for the reflector device. Tracks or supporting grooves 18, may been molded or engraved, in order to act as guide-rails for a variety of movements performed by the ornamental reflector system. Magnet 10, suitably mounted on the body structure of reflector 1, will react to alterations of a magnetic field occuring some distance away. A second magnet or electromagnet 15 has been placed undemeath transparent object 16. Any subtle magnetic field fluctuations created by 16, will affect magnet 10 above, resulting in locomotion.
   Modified guide rails or pivots, within the socket compartment, will allow a multitude of movements within 360 degrees, including ascent and descent. An extra light source may been provided in the form of diode lamps 12, in order to secure illumination, when externally received light fades. An induced electric field is fed wirelessly from primary coil 14, concealed underneath pyramid 16, to a secondary coil 11, aboard motile reflector 1, providing energy to diode 12.
Fig. 14 Shows a perspective view of Fig 13. The placement of reflector 1, inside pyramid 16, will give an observer the impression of an active eye gazing out from a transparent object, apparently alive, yet not visibly attached to electric cables or noticable power source.

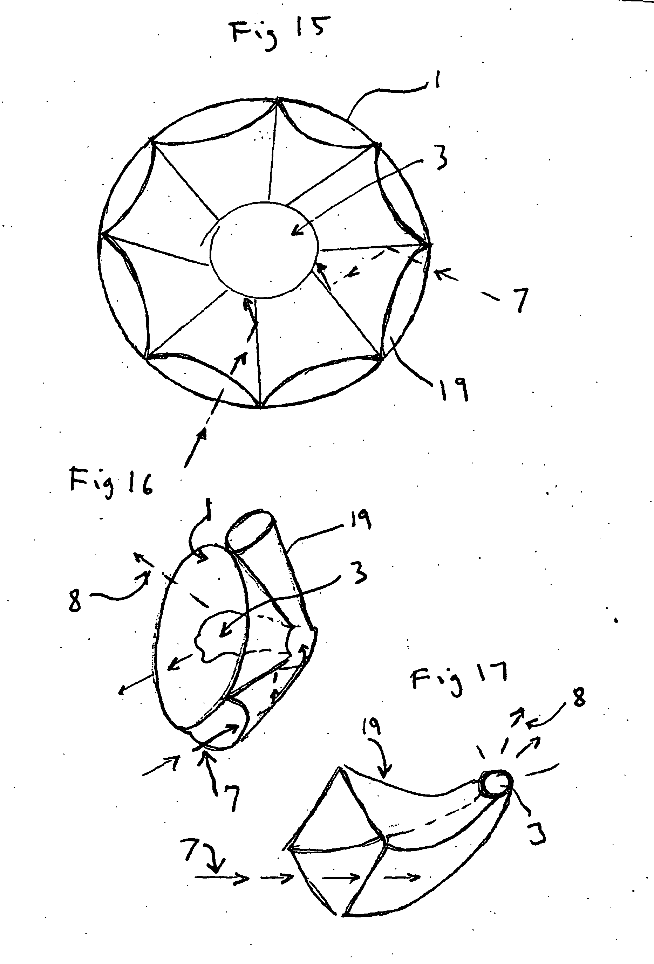

Fig. 15 Shows a rear view of reflector 1, surrounded by conical or pyramidal reflectors 19, arranged in circular formation, with their larger apertures placed outwardly in order to receive light 7 and guide light rays towards their tapering open ends, enabling light to reach light conducting/emitting/receiving material 3. Illuminated centre piece 3, may be disc shaped in order to display holographs or laser engraved motifs, or of a variety of shapes and colours to appear attractive to an observer or act as a light source for an object. The conical or pyramidal reflectors 19 may be slightly curved, in order to fit or rap around a host reflectors convex surface, and their receiving apertures may be modified to scoop up as much external light as possible. Light diodes powered by induction methods can be incorporated somewhere along the internal reflective surfaces of reflectors 19, at night.
Fig. 16 shows a perspective view of Fig 15, but only two conically or pyramidally shaped reflectors 19 covering the back side of reflector 1. Light rays 7 enter the large aperture of reflector 19, and are internally reflected and reach light receiving/emitting material 3, which extends into reflector 1, in order to disburse light rays 8.
Fig. 17 illustrates graphically how a cone shaped or pyramid shaped reflector 19, may be modified in order to fit around and be suitable as a light capturing and guiding device. Light 7 enters the reflectors large opening and is transported to it's smaller apical window in order for light conducting material 3 to transmit rays 8.
Fig. 18 Is a modified version of Fig. 17, but without reflector 1, and shows how conical or pyramidal reflectors 19 can be arranged in star formation, in order to concentrated light to a central point, and function independently from reflector 1. Light rays 7 enter the pyramid's or cone's base section and transcend in a light guided mode towards the apex/vortex, to engage with suitable light receiving material, able to exhibit rays 8.
Fig.19 Shows a cross sectional side view of Fig. 18. A centrally placed piece of light conducting/transmitting material 3, receives light 7 from either side or 180 to 360 degrees, depending on the magnitude and placement of reflectors. Light diodes powered by a primary coil may be fitted near or in one or more apertures. A magnet may also be added, along the course of the structure, in order to interact with outside magnetic forces for surplus versatility and leisure activity.
Fig. 20 Shows an oblong reflector 1, fed by light rays 7 received by material 3 which ends have been provided with lenses or prisms 6. Parallel elongated troughs will form instead when two reflectors are assembled together, compared to Fig.1 and Fig. 3.

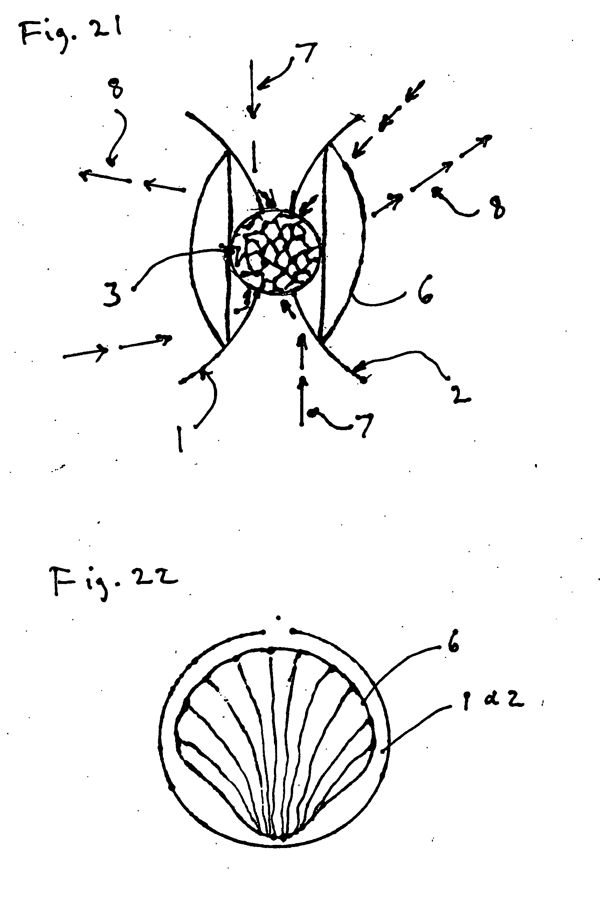

Fig. 21 Depicts a side view of a symetrically designed dual or tandem reflector ornament, with a thick bulging fan-shaped or sea shell shaped lens or prism 6 , covering a multifaceted optic fluorescent body 3.
   The facets may be pentagenol, hexagonal,circular or comprise other special characteristics. The surface of lens 6 is made up of grooves and trough depressions, that fan out from from a tapered origin region. As the structure spreads out in this fan-like mode, the thickness of lens or prism 6, gradually thickens until approaching a central portion, and then becomes progressively thinner until it approaches its outer edges. This particular configuration is ideal for concentrating rays toward the reflector and luminescent material as well as providing a decorative dispersal of light rays to its surrounding.
Fig. 22 Shows a front view of Fig. 21, as it would appear on either side of the ornament, demonstrating the characteristic troughs and furrows accommodating lens 6.

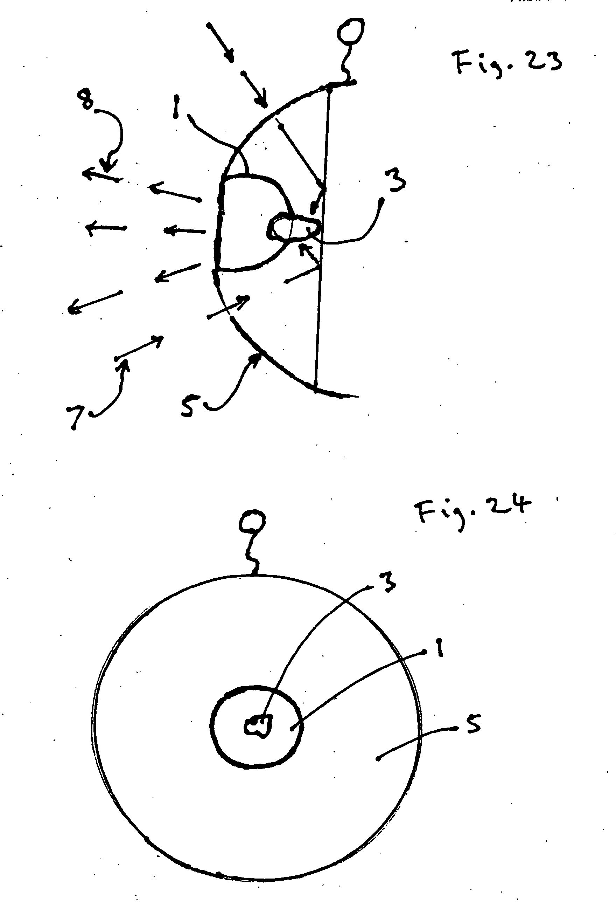

Fig. 23 shows a side view of a circular wall ornament having a transparent bowl shaped prismatic surface 5. The tapered portion of the bowl has been provided with a reflector ornament 1 in order to distribute light from this section. A flat mirror covers the large aperture of the bowl and has its reflective surface directed towards the reflectors fluorescent material 3, in order to direct incoming ambient light 7 from the bowls sides onto said illuminator.
Fig. 24 shows a front view of of Fig. 23. Reflector 1 houses luminous material 3, and faces a viewer, and is covered by a bowl shaped prismatic face 5. A tether and hook have also been provided to hang the ornament securely on a wall preferentially near a window.

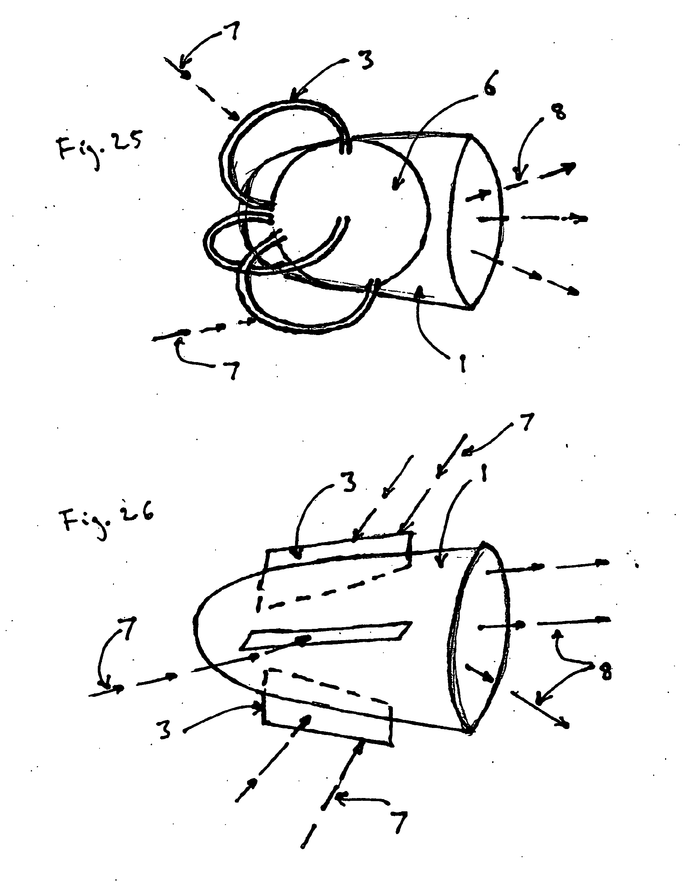

Fig. 25 Shows a bell shaped versatile reflector ornament. Looped illuminated luminescent rods or strands 3 have their first tail ends piercing apertures confined to a central rear area of the reflector 1 and arch in such a way as to join with their second terminal ends into various other apertures along the body of the reflector, thereby providing internal illumination. Part of the cavernous area of the reflector has a refracting body 6. The refracting body may contain an attractive figure centrally embedded within its structure,and may receive light from behind as well as from the sides. A spectator will notice how the light 8 shifts from side to side as he/she moves the reflector ornament.

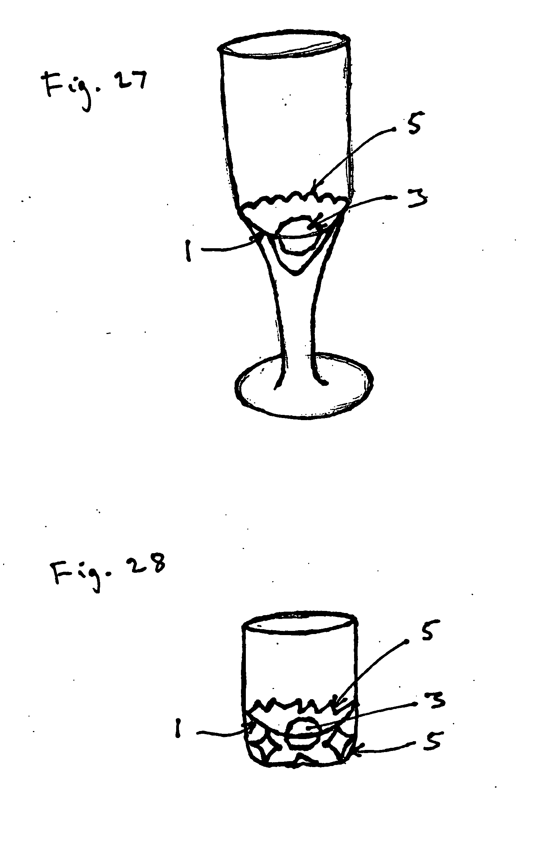

Fig. 28 desribes a device not covered by the claims and shows a variant of Fig. 25. Sheets or fins 3 have replaced rods, and slit like apertures have been constructed along the course of the reflectors body structure 1 in order for them to deliver a pleasant variable light effect 8. Modified versions may have looped sheets going from one aperture to another as in Fig. 25, and the slit like apertures may be straight, zig-zag, curved or irregular.
Fig. 27 Depicts a wine glass with an internally mounted reflector ornament so that the fluorescent optic body 3 protrudes into a distal depression at the stem/shaft end region where it merges with the base of the receptacle.
   The thickness and shape of the transluscent stem acts as a light receiving/transmitting device as well as concentrates rays of light onto the projecting fluorescent body 3, partly housed in the stem section and partly mounted in the reflector surfaces of reflector 1. When subjects lift the glass and simultaneously tilt it, a nice glow will appear from within the container vessel. This light show can become more artistic if the beakers walls are lined with highly reflective material such as gold or silver.
Fig. 28 Shows a perspective view of a drinking glass in a similar set up to that exemplified in Fig. 27, but here the stem has been replaced by a thick prismatic lens 5 in the shape of a glass base/foot. Reflector 1 utilises its accompanying magnet or magnets in order to levitate and rotate, when influenced by suitable external magnetic forces, creating moving light and adding new dimensions to the visual display.
   The central trough reflector formed between two opposing convex surfaces of reflector 1 and 2, not shown here, may also be utilised in a decorative manner by surrounding the area with a prismatic face or frost-like surface.
Fig. 29 Shows a side view of two twin reflectors using an alternative power source to provide intense light.This particular configuration allows light to travel from distally placed diode lamps through a light guide system composed of internally reflecting tapering cones or pyramids 2b. Light is projected towards an exposed area of luminescent material 3 ,lodged between reflector 1 and 2. A light base may be provided which operates by means of induction or from a mains supply unit.
Fig. 30 Is a front view of Fig. 29, and shows how light rays 7 emanate from diodes 12 and are conveyed to the reflectors 1 and 2a's hind region delivering collimated and divergent rays of light in a concentrated way to a section of the luminescent material 3.
Fig. 31. Shows a side view of a versatile reflector ornament hovering above a levitator. The levitator uses electro-magnetism to stabilise and assist in levitating the ornament's magnet
Fig. 32. Shows a perspective view of a magic money bank. Existing boxes are divided by a diagonal mirror giving the impression that half of the box actually appears to be a whole cube when in fact it is only a reflecting image adjoining half of the real image. This trick may be modified by having two plane mirror reflectors 1 and 2 on either side and inserting luminescent material 3 in a suitable shape through one or more apertures adjoining both sides. Luminescent material 3 in the shape of an object or figure will glow when it is excited by radiant light 7 received from either side and and as a light source for a viewer as well as deliver a spectacular trick, namely that the object will appear to be longer or bigger than what it actually is. As an ornament one could have figures for example dolphins positioned half way through mirrors 1 and 2 appearing to jump through the reflective surface.
   Lining one compartment partially with silver will create a V-shaped trough light collector, indirectly providing a brighter glow to its partitioned neighbour.
Fig. 33a,b and c show design samples of ornaments made of spiral shaped luminescent material, where each end is provided with reflectors and lenses or prisms. Spiral shapes increase the surface area within a certain space and are ideal for receiving light to energise photons within its material, providing light to the reflectors. The reflectors in turn concentrate light onto the end tips and further promote photon activity.
   Fig. 33a shows a pyramid which may be further modified by adding an eye or other refracting body to the reflectors.
   Fig. 33b depicts a circular shape and can be further modified by gadding special gemstones to one or both reflectors.
   Fig. 33c illustrates a three dimensional double helix spiral ornament, with reflectors lenses and prisms.
Fig. 34. Shows a side view of a special arrangement where a large reflector 1 is intended to collect sunlight through a light collecting prism able to concentrate light onto a multifaceted luminescent body 3, and thereby deliver light to a smaller reflector 2, provided with prismatic lens 6. This ornament will act as a novelty street lamp or decorative garden item.
Fig. 35 Shows a side view of luminescent material 3, resembling light bulbs appearing from either side of reflector 1 and 2. Light is received and transmitted from either side of the reflectors as well as in-between them. Modified versions may allow each reflector and bulb to work independently.
Fig. 36 is a device not covered by the claims and shows a cross sectional side view a translucent ornamental figure acting as a prism and lens 5, receiving light from one symmetrical and one asymmetrical luminescent body 3, mounted in apertures of a oblong reflector 1. Each body 3 receives light rays 7 from external sources. Luminescent light rays emanating from bodies 3, change wavelength as they refract through prism 5, and appear as visible light 8.
Fig. 37a Shows a cross section of a light guiding reflector. Light rays 7, enter reflector 1's large aperture and are intemally reflected in order to concentrate rays ontoluminescent material 3, mounted between reflector 1 and 2. Light is further refracted through prismatic lens 5, issuing as rays 8.
Fig. 37b Shows a cross section of a light concentrating parabolic reflector 1, reflecting onto an opposing reflector 2, able to redirect collimated or other rays onto a luminesce body 3.
Fig. 37c is a device not covered by the claims and shows a flourescent or luminescent body 3, positioned within parabolic mirror 1's focal point, receiving intense rays eminating from 7.
Fig. 38a Shows a cross section of a generalized appearance of any reflector such as pyramidal,conical,trough,oblong or V-shaped, having one or more apertures along it's reflecting walls 1,pierced by one or more flourescent or luminescent materials 3, of any suitable size or shape, receiving concentrated rays 7. Stimulated photons are released from body 3, which penetrate lens 5, alter frequency and refract as visible rays 8.
Fig. 38b is a perspective view of layers of sheets comprised of luminescent material 3, designed to be internally mounted into apertures of oblong reflectors These sheets may be of uniform colour or divided into primary colours such as red,blue and green.
Fig. 38c is a perspective view of a bundle of rods containing luminescent dyes or pigments 3, and may be divided into a primary colours as described in fig. 38b, or other colours such as magenta, cyan and yellow.

## Claims

1. A versatile light system adapted to receive and collect ambient light or light from a distant light source, comprising a fluorescent or photo-luminescent body (3) and at least a first reflector member (1) having a tapered reflective surface, wherein said fluorescent or photo-luminescent body (3) is partly mounted in an opening at the convergent end of the tapered reflecting surface with a front side protruding in the reflector (1) and a rear side extending behind said reflector (1), said light system being arranged so that ambient light collected through said reflective surface is concentrated to said photo-luminescent body's front side which will emit some luminescent light and transmit some luminescent light to the rear side of said photo-luminescent body (3), said versatile light system further comprising one or more additional reflectors (2, 19) with a tapered reflective surface and an opening at the convergent end thereof arranged to receive in the respective reflectors a rear portion of said fluorescent or photo-luminescent body (3) so as to collect and concentrate ambient light towards the corresponding protruding rear portion of said fluorescent or photo-luminescent body (3).

2. A versatile light system according to claim 1, comprising said first reflector (1) associated with said front side and a second reflector member (2) associated with said rear side, so that ambient light collected through said second reflector (2) is concentrated to said photo-luminescent body's rear side which will emit some luminescent light and transmit some luminescent light to the front side of said photo-luminescent body (3), enabling thereby both sides of said fluorescent or photo-luminescent body (3) to serve simultaneously as light receiver and transmitter.

3. A versatile light system according to claim 2, wherein the back surface of the first reflector member (1) and the back surface of the second reflector member (2) each defines a convex reflective surface such that ambient light reflected on said convex reflective surfaces will excite the intermediate portion between said front and said rear side of said fluorescent or photo-luminescent body (3).

4. A versatile light system adapted to receive and collect ambient light or light from a distant light source comprising a fluorescent or photo-luminescent body (3) and at least a first reflector member (1) having a tapered reflective surface, wherein said fluorescent or photo-luminescent body (3) is partly mounted in an opening at the convergent end of the tapered reflecting surface with a front side protruding in the reflector member (1) and a rear side extending behind said reflector member (1), said light system being arranged so that ambient light collected through said reflective surface is concentrated to said photo-luminescent body's front side which will emit some luminescent light and transmit some luminescent light to the rear side of said photo-luminescent body (3), said photo-luminescent body being arranged so that the part of said fluorescent or photo-luminescent body (3) behind said first reflector (1) is adapted to receive ambient light excitation and to emit some luminescent light behind said first reflector member (1), said versatile light system further comprising lenses or prisms (5, 6) arranged near or at the surface of said rear side of said fluorescent or photo-luminescent body (3).

5. A versatile light system according to any preceding claim, wherein said reflectors are of conical or pyramidal shape.

6. A versatile light system according to any preceding claim, wherein said reflectors are of concave or parabolic shape.

7. A versatile light system according to any preceding claim, wherein said reflectors are of oblong trough shape.

8. A versatile light system according to any preceding claim, wherein the fluorescent or photo-luminescent body (3) contains suitable solids, liquids, gels or gases.

9. A versatile light system according to any preceding claim, comprising a diode lamp (12) embedded in said photo-luminescent body (3) and a secondary coil (11) accommodated so that an induced current received from a remote primary coil (14) may power said diode lamp (12).

10. A versatile light system according to claim 9, comprising a magnet (10) suitably mounted in order to engage with distant magnetic forces (15) so as to enable movement of said light system.

11. A versatile light system according to any preceding claim, wherein said fluorescent or photo-luminescent body (3) is selected so as to emit light under the excitation of distant energy sources such as ultra-violet, infrared, microwaves or other suitable electromagnetic light sources.

12. A versatile light system according to any preceding claim, wherein portions of said first reflector member (1) are covered with sheets containing polarizing particles responsive to small current changes actuated by a solar cell or a secodary coil receiving energy from a distant primary coil so as to provide a blinking effect.

13. A versatile light system according to any preceding claim, wherein the fluorescent or photo-luminescent member (3) contains fluorescent substances within vacuum or noble gases.

14. A versatile light system according to any preceding claim, wherein said fluorescent or photo-luminescent member (3) contains fluorescent substances within a translucent pressurized compartment.

15. A versatile light system according to any preceding claim, wherein said first reflector (1) is provided with lenses or prisms of various types such as Fresnel, hologram or laser engraved.

16. A versatile light system according to any preceding claim, wherein said fluorescent or photo-luminescent body member (3) may be of organic or inorganic origin and contains traces of radio-active material such as depleted uranium or plutonium.

## Patentansprüche

1. Ein vielseitiges System angepasst Licht zu erhalten und zu sammeln Umgebungslicht oder Licht von einer fernen Lichtquelle, bestehend aus einem fluoreszierenden Leuchtstoff-oder Foto-Körper (3) und mindestens einen ersten Reflektor Mitglied (1) mit einem verjüngten reflektierende Oberfläche, wobei die Fluoreszenz-oder Foto-Leuchtstoffe Körper (3) ist teilweise hinter montiert in eine Öffnung an der konvergenten Ende des konischen spiegelnden Fläche mit einer Vorderseite vorspringenden in den Reflektor (1) und einer Rückseite erstreckt sagte Reflektor (1), sagte Licht-System angeordnet so dass durch Umgebungslicht gesammelt, sagte reflektierende Oberfläche konzentriert ist, sagte Photo-Lumineszenz Körpers Vorderseite, die Licht emittieren einige Leuchtziffern wird und übermittelt einige Lumineszenzlicht auf der Rückseite, sagte Photo-Lumineszenz Körper (3), sagte vielseitige Licht-System weiter mit einer oder mehreren zusätzlichen Reflektoren (2, 19) mit einem verjüngten reflektierende Oberfläche und eine Öffnung an der konvergenten Ende desselben angeordnet erhalten von der jeweiligen Reflektoren einen hinteren Abschnitt, sagte fluoreszierenden Leuchtstoff-oder Foto-Körper (3) so zu sammeln und konzentrieren Umgebungslicht auf die entsprechenden vorstehenden hinteren Abschnitt des fluoreszierenden Leuchtstoff-oder Foto-Körper (3).

2. Ein vielseitiges Licht-System nach Anspruch 1, bestehend aus dem ersten Reflektor (1), sagte im Zusammenhang mit der Vorderseite und ein zweiter Reflektor Mitglied (2), sagte im Zusammenhang mit der Rückseite, so dass Umgebungslicht durch 2 gesammelt zweiten Reflektor () ist konzentriert, sagte Photo-Lumineszenz Körpers Rückseite, die Licht emittieren einige Leuchtziffern wird und übermittelt einige Lumineszenzlicht auf der Vorderseite sagte Leuchtziffern Körper (3), so dass **dadurch** beide Seiten, sagte Foto fluoreszierenden Leuchtstoff-oder Foto-Körper ( 3) zu dienen gleichzeitig als Sender und Empfänger Licht.

3. Ein vielseitiges Licht-System nach Anspruch 2, wobei die Rückseite des ersten Reflektors Mitglied (1) und die Rückseite des zweiten Reflektors Mitglied (2) jeweils definiert eine konvexe reflektierende Oberfläche, so dass Umgebungslicht reflektiert auf konvexen reflektierenden Oberflächen wird erregen die Zwischenteil zwischen dem vorderen und dem hinteren Seite des Fluoreszenz-oder Foto-Leuchtstoffe Körper (3).

4. Ein vielseitiges System angepasst Licht zu erhalten und zu sammeln Umgebungslicht oder Licht von einer fernen Lichtquelle mit einem fluoreszierenden Leuchtstoff-oder Foto-Körper (3) und mindestens einen ersten Reflektor Mitglied (1) mit einem verjüngten reflektierende Oberfläche, wobei die Fluoreszenz-oder Foto Leuchtzeiger-Körper (3) ist teilweise hinter montiert in eine Öffnung an der konvergenten Ende des konischen spiegelnden Fläche mit einer Vorderseite vorspringenden Mitglied im Reflektor (1) und einer Rückseite erstreckt sagte Reflektor Mitglied (1), wobei Licht-System wird so angeordnet, dass Licht durch die gesammelten sagte ambient reflektierende Oberfläche konzentriert ist, sagte Photo-Lumineszenz Körpers Vorderseite, die Licht emittieren einige Leuchtziffern wird und übermittelt einige Lumineszenzlicht auf der Rückseite, sagte Photo-Lumineszenz Körper (3), sagte, Foto- Leuchtzeiger Körper gesagt angeordnet, so dass der Teil, sagte fluoreszierenden Leuchtstoff-oder Foto-Körper (3) hinter empfangen Umgebungslicht Anregung und emittieren rund sagte Lumineszenzlicht hinter erste Reflektor, Mitglied (1) dem ersten Reflektor (1) angepasst ist, vielseitig Licht-System weiter aus Linsen oder Prismen (5, 6) angeordnet in der Nähe oder auf der Oberfläche der hinteren Seite des Fluoreszenz-oder Foto-Leuchtstoffe Körper (3).

5. Ein vielseitiges Licht-System nach einem der vorhergehenden Ansprüche, wobei die Reflektoren sind von konischen oder Pyramidenform.

6. Ein vielseitiges Licht-System nach einem der vorhergehenden Ansprüche, wobei die Reflektoren sind konkav oder parabolische Form.

7. Ein vielseitiges Licht-System nach einem der vorhergehenden Ansprüche, wobei die Reflektoren sind von länglicher Form der Rinne.

8. Ein vielseitiges Licht-System nach einem der vorhergehenden Ansprüche, wobei die Fluoreszenz-oder Foto-Leuchtstoffe Körper (3) enthält, eignet sich Feststoffe, Flüssigkeiten, Gels oder Gasen.

9. Ein vielseitiges Licht-System nach einem der vorhergehenden Ansprüche, bestehend aus einer Leuchtdiode (12) eingebettet, sagte Photo-Lumineszenz Körper (3) und eine Sekundärspule (11) untergebracht, so dass eine (14) induzierte Strom erhielt von einem entfernten Primärspule kann Macht sagte Leuchtdiode (12).

10. Ein vielseitiges Licht-System nach Anspruch 9, bestehend aus einem Magneten (10) passend montiert, um der engage mit entfernten magnetischen Kräfte (15) so wie Bewegung zu ermöglichen, sagte Licht-System.

11. Ein vielseitiges Licht-System nach einem der vorhergehenden Ansprüche, **dadurch gekennzeichnet**, fluoreszierenden oder lumineszierenden Foto-Körper (3) Quellen ausgewählt, so wie das Licht zu emittieren Licht unter der Anregung von fernen Energiequellen wie UV-, Infrarot-, Mikrowellen-oder anderen geeigneten elektromagnetischen .

12. Ein vielseitiges Licht-System nach einem der vorhergehenden Ansprüche, wobei Teile des ersten Reflektors Mitglied (1) sind bedeckt mit Blättern mit polarisierenden Partikel reagieren auf kleine Veränderungen so aktuelle betätigt durch eine Solarzelle oder eine Spule Sekundärgruppe erhalten Energie aus einer fernen Primärspule um eine Wirkung zu blinken.

13. Ein vielseitiges Licht-System nach einem der vorhergehenden Ansprüche, wobei die Fluoreszenz-oder Foto-Leuchtkörper (3) enthält fluoreszierende Stoffe im Vakuum oder Edelgase.

14. Ein vielseitiges Licht-System nach einem der vorhergehenden Ansprüche, **dadurch gekennzeichnet**, fluoreszierenden oder lumineszierenden Foto-Mitglied (3) enthält fluoreszierende Substanzen innerhalb einer transluzenten Druck Abteil.

15. Ein vielseitiges Licht-System nach einem der vorhergehenden Ansprüche, wobei der erste Reflektor (1) vorgesehen ist graviert mit Linsen oder Prismen verschiedener Typen wie Fresnel, Hologramm oder Laser.

16. Ein vielseitiges Licht-System nach einem der vorhergehenden Ansprüche, **dadurch gekennzeichnet**, fluoreszierenden oder lumineszierenden Foto-Mitglied Körper (3) Ursprungs sein können organischer oder anorganischer und enthält Spuren von radioaktiven Material wie abgereichertes Uran oder Plutonium.

## Revendications

1. Un système d'éclairage polyvalent conçu pour recevoir et collecter la lumière ambiante ou la lumière d'une source lumineuse lointaine, comprenant une lampe fluorescente ou luminescente corps photo (3) et au moins un membre de premier réflecteur (1) ayant une surface réfléchissante conique, ledit fluorescents ou -luminescentes corps photo (3) est en partie monté dans une ouverture à la fin de la convergence de la surface réfléchissante conique avec une face avant en saillie dans le réflecteur (1) et une face arrière qui s'étend derrière le réflecteur (1), ledit système de la lumière étant disposés de sorte que la lumière ambiante collectés au travers de ladite surface réfléchissante est concentrée sur ledit corps luminescent Front side-photo qui émettent peu de lumière lumineux et de transmettre un peu de lumière luminescent à l'arrière dudit corps luminescents photo (3), a déclaré polyvalent système d'éclairage comprenant en outre un ou plusieurs réflecteurs supplémentaires (2, 19) avec une surface réfléchissante conique et une ouverture à la fin de celle-ci convergent conçu pour recevoir dans les réflecteurs respectifs une partie arrière de ladite ou photo-luminescent corps fluorescent (3) de façon à recueillir et de concentrer la lumière ambiante vers la saillie correspondante partie arrière de ladite ou photo-luminescent corps fluorescent (3).

2. Un système polyvalent de lumière selon la revendication 1, comprenant ledit premier réflecteur (1) associé à ladite face avant et un membre de second réflecteur (2) associée à ladite face arrière, de sorte que la lumière ambiante collectés à travers ledit second réflecteur (2) est concentrée sur ledit corps de l'arrière-luminescentes côté photo qui émettent peu de lumière lumineux et de transmettre un peu de lumière luminescent à la face avant dudit corps luminescents photo (3), permettant ainsi des deux côtés de ladite ou photo-luminescent corps fluorescent ( 3) de servir à la fois comme récepteur de lumière et de l'émetteur.

3. Un système polyvalent de lumière selon la revendication 2, dans lequel la surface arrière du membre premier réflecteur (1) et la surface arrière du membre second réflecteur (2) Chacun définit un surface réfléchissante convexe telle que la lumière ambiante réfléchi sur ladite surface réfléchissante convexe sera exciter la partie intermédiaire entre ladite première et ladite face arrière de ladite ou photo-luminescent corps fluorescent (3).

4. Un système d'éclairage polyvalent conçu pour recevoir et collecter la lumière ambiante ou la lumière d'une source lumineuse lointaine comprenant une lampe fluorescente ou luminescente corps photo (3) et au moins un membre de premier réflecteur (1) ayant une surface réfléchissante conique, ledit fluorescente ou une photo -luminescentes corps (3) est en partie monté dans une ouverture à la fin de la convergence de la surface réfléchissante conique avec une face avant en saillie dans le membre réflecteur (1) et une face arrière qui s'étend derrière ledit élément réflecteur (1), ledit système de lumière étant disposés de manière que la lumière ambiante collectés au travers de ladite surface réfléchissante est concentrée sur ledit corps luminescent Front side-photo qui émettent peu de lumière lumineux et de transmettre un peu de lumière luminescent à l'arrière dudit corps luminescents photo (3), dit-photo corps lumineux étant disposés de sorte que la partie de ladite ou photo-luminescent corps fluorescent (3) derrière ledit premier réflecteur (1) est adapté pour recevoir la lumière ambiante et d'excitation à émettre de la lumière lumineux derrière ledit élément premier réflecteur (1), a déclaré polyvalent système d'éclairage comprenant des lentilles ou des prismes d'autres (5, 6) disposé à proximité ou sur la surface de ladite face arrière de ladite ou photo-luminescent corps fluorescent (3).

5. Un système polyvalent de lumière selon l'une quelconque des revendications précédentes, **caractérisé en ce que** les réflecteurs sont de forme conique ou pyramidale.

6. Un système polyvalent de lumière selon l'une quelconque des revendications précédentes, **caractérisé en ce que** les réflecteurs sont de forme concave ou parabolique.

7. Un système polyvalent de lumière selon l'une quelconque des revendications précédentes, **caractérisé en ce que** les réflecteurs sont de forme oblongue creux.

8. Un système polyvalent de lumière selon l'une quelconque des revendications précédentes, dans lequel le fluorescents ou luminescents corps photo (3) contient des solides appropriés, les liquides, gels ou de gaz.

9. Un système polyvalent de lumière selon la revendication précédente, comprenant un feu à diode (12) intégré dans ledit corps luminescents photo (3) et une bobine secondaire (11) logés de sorte qu'un courant induit obtenu à partir d'une bobine primaire à distance (14) peut pouvoir ladite lampe à diode (12).

10. Un système polyvalent de lumière selon la revendication 9, comprenant un aimant (10) monté dans convenablement afin de s'engager avec éloignés des forces magnétiques (15) de manière à permettre le déplacement dudit système d'éclairage.

11. Un système polyvalent de lumière selon l'une quelconque des revendications précédentes, **caractérisé en ce que** la photo-luminescentes ou fluorescentes corps (3) est choisi de manière à émettre de la lumière sous l'excitation de sources d'énergie éloignés comme ultra-violet, infrarouge, micro-ondes ou d'autres sources de lumière appropriée électromagnétiques.

12. Un système polyvalent de lumière selon la revendication précédente, **caractérisé en** portions dudit élément premier réflecteur (1) sont couverts de feuilles contenant des particules sensibles à la polarisation de petits changements en cours actionnés par une cellule solaire ou une bobine secodary reçoit de l'énergie primaire à partir d'un serpentin de manière lointaine de fournir un effet de clignotement.

13. Un système polyvalent de lumière selon l'une quelconque des revendications précédentes, dans lequel le fluorescents ou luminescents membres photo (3) contient des substances fluorescentes dans le vide ou gaz nobles.

14. Un système polyvalent de lumière selon l'une quelconque des revendications précédentes, **caractérisé en ce que** la photo-luminescentes ou fluorescentes membres (3) contient des substances fluorescentes dans un compartiment pressurisé translucide.

15. Un système polyvalent de lumière selon la revendication précédente, ledit premier réflecteur (1) est fourni avec des lentilles ou des prismes de différents types tels que Fresnel, hologramme ou gravé au laser.

16. Un système polyvalent de lumière selon l'une quelconque des revendications précédentes, **caractérisé en ce que** la photo-luminescentes ou fluorescentes membre du corps (3) peut être d'origine organique ou inorganique et contient des traces de radio-actifs matériels tels que l'uranium appauvri ou du plutonium.
